# EUROPÄISCHE PATENTSCHRIFT

(11) **EP 0 499 213 B1**
(45) Veröffentlichungstag und Bekanntmachung des Hinweises auf die Patenterteilung: **27.05.1998**
(21) Anmeldenummer: 92102278.6
(22) Anmeldetag: 11.02.1992
(51) Int. Cl.: H04Q 11/04, H04Q 3/545, H04M 11/06

(54) **Modular strukturiertes ISDN-Kommunikationssystem**
Modular structured ISDN communication system
Système de communication RNIS à structure modulaire

(30) Priorität: 13.02.1991 DE 4104365
(43) Veröffentlichungstag der Anmeldung: 19.08.1992
(73) Patentinhaber: SIEMENS AKTIENGESELLSCHAFT, 80333 München (DE)
(72) Erfinder: Werres, Bernhard, Dipl.-Ing., W-8032 Gräfelfing (DE); Weber, Dietmar, Dipl.-Math., W-8000 München 70 (DE)

(56) Entgegenhaltungen:
- EP-A- 0 333 123
- COMPUTER ARCHITECTURE NEWS, Bd.17, Nr.4, Juni 1989, NEW YORK US Seiten 62 - 68, XP47304 ELKATEEB ET AL. 'A priority strategy on RISC for real-time multi-tasking software applications'
- BELL SYSTEM TECHNICAL JOURNAL, Bd.62, Nr.1, Januar 1983, NEW YORK US Seiten 303 - 322 GRZELAKOWSKI ET AL. 'DMERT Operating System'

## Beschreibung

Die Erfindung betrifft ein modular strukturiertes ISDN-Kommunikationssystem gemäß dem Oberbegriff des Patentanspruchs 1.

Aus der europäischen Patentanmeldung 0 333 123 ist bereits ein solches Kommunikationssystem bekannt, das mit Hilfe eines Echtzeitbetriebssystems die kommunikationssystemspezifischen Funktionen und Aufgaben steuert und zusätzlich ein Teilnehmerbetriebssystem aufweist, das mit dem Echtzeitbetriebssystem so gekoppelt ist, daß einerseits die vom Echtzeitbetriebssystem verwalteten Daten und Datenapplikationen dem Zugriff des Teilnehmerbetriebssystems überstellt werden können und andererseits die unter dem Teilnehmerbetriebssystem geführten Datenapplikationen ohne zusätzlichen Adaptionsaufwand in das Kommunikationssystem eingefügt werden können. Durch die Implementierung eines Teilnehmerbetriebssystems, z. B. des Betriebssystems XENIX, hat das Kommunikationssystem somit eine Doppelfunktion erhalten; es erledigt wie bisher die kommunikationstechnischen Aufgaben und steht zusätzlich im Sinne einer allgemeinen DV-Anlage für individuelle Programmerstellung und Datenverarbeitung zur Verfügung.

Bei dem bekannten Kommunikationssystem ist für die beiden Betriebssysteme eine gemeinsame Prozessoreinrichtung vorgesehen, die in Zeiten, in denen kommunikationstechnische Aufgaben zu bearbeiten sind, unter Verwaltung des Echtzeitbetriebssystems steht und in Zeiten, in denen keine kommunikationstechnikbezogenen Funktionen zu erfüllen sind, dem Teilnehmerbetriebssystem überstellt ist.

Um einen kontinuierlichen Übergang zwischen beiden Betriebssystemen zu ermöglichen, werden bestimmte, dem Adressierungsmechanismus des Systemprozessors entsprechend aufgebaute Deskriptoren für beide Betriebssysteme identisch ausgebildet. Der eigentliche programmtechnische Übergang vom Echtzeitbetriebssystem in das Teilnehmerbetriebssystem erfolgt in einem modifizierten Programmsubsystem des Echtzeitbetriebssystems. Um sicherzustellen, daß zeitkritische Funktionen des Echtzeitbetriebssystems gegenüber sämtlichen Funktionen des Teilnehmerbetriebssystems vorrangig bearbeitet werden, wird bei dem bekannten Kommunikationssystem das Leerlaufprogrammsubsystem (Idle Task) des Echtzeitbetriebssystems gewissermaßen als Schleuse für einen Ubergang in das Teilnehmerbetriebssystem ausgebildet. Das heißt, daß nur dann, wenn das Echtzeitbetriebssystem sein Leerlaufprogrammsubsystem aktiviert hat, also keine Aufgaben anstehen, ein Übergang stattfinden kann.

Der Übergang vom Teilnehmerbetriebssystem zurück in das Echtzeitbetriebssystem wird dann durch einen Anreiz (Interrupt) eingeleitet, der an das Echtzeitbetriebssystem gerichtet ist. Um Daten von einem Betriebssystem in das andere übernehmen zu können, ist ein Interkommunikationsdatensegment vorgesehen, das eine 'Briefkastenfunktion' ausübt. Zum Beispiel müssen an das Teilnehmerbetriebssystem gerichtete Anreize während der Abarbeitung des Echtzeitbetriebssystems in dem Interkommunikations-datensegment zwischengespeichert werden, um dann nach einem Übergang in das Teilnehmerbetriebssystem durch dieses bearbeitet werden zu können.

Bei dem bekannten Kommunikationssystem ist die dem Teilnehmerbetriebssystem zuteil werdende Verarbeitungskapazität des Systemprozessors im wesentlichen davon abhängig, wie hoch die Belastung des Kommunikationssystems durch kommunikationstechnikspezifische Aufgaben ist. So lassen sich weder Berechnungen anstellen noch Angaben darüber machen, welchen Zeitraum die Bearbeitung eines jeweiligen Programmes im Teilnehmerbetriebssystem in Anspruch nehmen wird.

Die Aufgabe der vorliegenden Erfindung ist es, mit möglichst wenig programmtechnischem Aufwand für das Teilnehmerbetriebssystem wenigstens einen vorgebbaren Anteil der Verarbeitungskapazität des Systemprozessors sicherstellen zu können.

Gelöst wird diese Aufgabe ausgehend von einer Kommunikationsanlage gemäß den Merkmalen des Oberbegriffs des Patentanspruchs 1 durch die im kennzeichnenden Teil des Patentanspruchs 1 angegebenen Merkmale.

Mit der Implementierung eines weiteren Schleusensubsystems, das von einem periodischen Anreiz aktiviert wird, und dessen Priorität im Vergleich zu den anderen Programm-Subsystemen des Echtzeitbetriebssystems relativ hoch ist, wird zum einen erreicht, daß von der Verarbeitungskapazität der Systemprozessoreinrichtung ein vorgebbarer Mindestanteil dem Teilnehmerbetriebssytem zukommt, selbst wenn kommunikationstechnische Funktionen im Echt zeitbetriebssystem auf ihre Ausführung warten; zum anderen bleib die Verteilung der Verarbeitungskapazität aber noch so flexibel, daß die Bearbeitung extrem wichtiger und damit prioritätsmäßig höher eingestufter Programm-Subsysteme im Echtzeitbetriebssystem nicht verzögert wird.

Vorteilhafte Ausgestaltungen der Erfindung ergeben sich aus den Unteransprüchen.

Ein Ausführungsbeispiel der Erfindung wird im folgenden anhand der Zeichnung näher erläutert, wobei sich die Beschreibung im wesentlichen auf die gegenüber dem genannten Stand der Technik ergänzten bzw. veränderten Merkmale beschränkt. Für eine umfassende Beschreibung, insbesondere der Struktur des Kommunikationssystems, wird ausdrücklich auf die europäische Patentanmeldung 0 333 123 verwiesen.

Die nachfolgende Beschreibung des Ausführungsbeispiels erfolgt anhand von zehn Figuren.

Dabei zeigen:
- FIG 1: eine Prinzipskizze zur Darstellung des Ubergangs von einem zum anderen Betriebssystem mit den wesentlichen Übergangsstadien und diesen zugeordneten Markierungen II bis IV,
- FIG 2: eine schematische Darstellung der relevanten Deskriptoren in den Tabellenspeichern und der relevanten Segmente in dem Systemspeicher sowie mit den zum Zeitpunkt II nach FIG 1 relevanten Verweisen,
- FIG 3: eine Darstellung nach FIG 2 mit den zum Zeitpunkt III nach FIG 1 relevanten Verweisen,
- FIG 4: eine Darstellung nach FIG 2 mit den zum Zeitpunkt IV nach FIG 1 relevanten Verweisen,
- FIG 5: eine schematische Darstellung der für eine Unterbrechungsbearbeitung relevanten Deskriptoren sowie den bei aktivem Echtzeit-Betriebssystem und einer diesem Betriebssystem zugehörigen Unterbrechungsanforderung relevanten Verweisen,
- FIG 6: eine Darstellung nach FIG 5 mit den bei aktivem Echtzeit-Betriebssystem und einem dem Teilnehmerbetriebssystem zugehörigen Unterbrechungsanforderung relevanten Verweisen,
- FIG 7: eine Darstellung nach FIG 5 mit den bei aktivem Teilnehmerbetriebssystem und einer diesem Betriebssystem zugehörigen Unterbrechungsanforderung relevanten Verweisen,
- FIG 8: eine Darstellung nach FIG 5 mit den bei aktivem Teilnehmerbetriebssystem und einer dem Echtzeit-Betriebssystem zugehörigen Unterbrechungsanforderung (hoher Priorität) relevanten Verweisen,
- FIG 9: eine Darstellung nach FIG 5 mit den bei aktivem Teilnehmerbetriebssystem und einer dem Echtzeit-Betriebssystem zugehörigen Unterbrechungsanforderung (niedriger Priorität) relevanten Verweisen,
- FIG 10: ein Zeitdiagramm zur Veranschaulichung der zeitlichen Verteilung der Rechenkapazität.

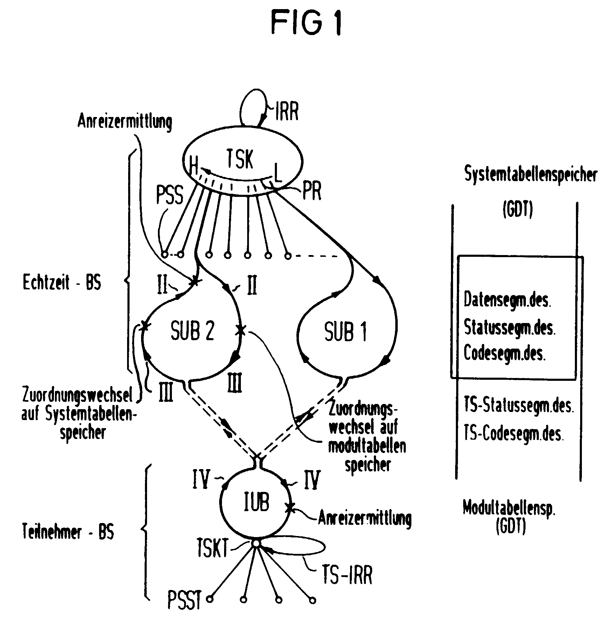

In FIG 1 ist eine einfache Prinzipskizze dargestellt, die den Übergang von einem zum anderen Betriebssystem anschaulich machen soll und die als Orientierungshilfe für die bei einem Übergang zwischen den beiden Betriebssystemen relevanten programmtechnischen Schritte dient.

Im oberen Teil der Skizze ist grob vereinfacht die Struktur des Echtzeit-Betriebssystems mit einem Task-Scheduler TSK und einer Vielzahl von an diesen angebundenen Programmsubsystemen PSS veranschaulicht. Der Task-Scheduler TSK ist derjenige Teil eines Multitasking-Betriebssystems, der aus den ablaufbereiten Programmsubsystemen (Tasken) das Programmsubsystem mit der höchsten Priorität PR auswählt und einem Zentralprozessor zur Ausführung zuweist. Dasjenige Programmsubsystem mit der niedrigsten Priorität PR wird als Idle Task bezeichnet und ist als Schleusensubsystem SUB1 ausgebildet. In der Zeichnung ist dieses Schleusensubsystem SUB1 als Schleife symbolisch dargestellt. Zusätzlich zu der als Schleusensubsystem SUB1 ausgebildeten Idle Task ist noch eines der Programmsubsysteme PSS mit vergleichsweise hoher Priorität PR als weiteres Schleusensubsystem SUB2 ausgebildet. Auch dieses weitere Schleusensubsystem SUB2 ist in der Zeichnung als Schleife symbolisiert.

Im unteren Teil der Skizze ist wiederum stark vereinfacht die Struktur des Teilnehmerbetriebssystems mit Task-Scheduler TSKT und an diesen angebundenen Programmsubsystemen PSST dargestellt. Ebenfalls in Form einer Schleife ist eine zur Kopplung mit dem Schleusensubsystem SUB1 oder dem weiteren Schleusensubsystem SUB2 dienende Interrupt-Übergangsroutine IUB des Teilnehmerbetriebssystems veranschaulicht.

Ein Übergang von einem Betriebssystem zum anderen kann entweder über die zum Schleusensubsystem SUB1 ausgebildete Idle Task oder über das weitere Schleusensubsystem SUB2 erfolgen. Beide Schleusensubsysteme SUB1, SUB2 sehen einen unmittelbaren Übergang in die Interrupt-Übergangsroutine IUB des Teilnehmerbetriebssystems vor. Die wichtigsten Schritte bei einem Übergang von einem zum anderen Betriebssystem sind durch die Ziffern II bis IV markiert, wobei im Ausführungsbeispiel nur auf den Fall Bezug genommen wird, daß beim Übergang zwischen den Betriebssystemen das weitere Schleusensubsystem SUB2 beteiligt ist. Zur Veranschaulichung der bei den einzelnen Schritten des Übergangs jeweils relevanten Deskriptoren in einem Systemtabellen- und Modultabellenspeicher, sind diese ausschnittsweise am rechten Rand der Skizze zusammen mit den dabei wesentlichen Deskriptoren schematisch dargestellt.

Zum besseren Verständnis der Funktion sowie des Zusammenwirkens der erwähnten System- und Modultabellenspeicher mit ihren Deskriptoren erscheint eine allgemeine Erläuterung des verwendeten Adressierungsverfahrens (als Einschub in die Figurenbeschreibung) nötig.

In einem Systemprozessor (nicht dargestellt), z. B. ein Mikroprozessor des Typs 80386 ist zur Bildung physikalischer Adressen ein mehrstufiges und tabellenorientiertes Adressierungsverfahren realisiert. Das Grundprinzip dieses Verfahrens liegt darin, im Adreßbereich des Arbeitsspeichers funktional zusammenhängende Speicherblöcke, im folgenden Segmente genannt, über Deskriptoren zu adressieren und eine eindeutige Zuordnung dieser Segmente zu einzelnen Programmpaketen, wie z. B. Tasks, Programmsubsysteme, hardwaremäßig zu unterstützen.

Für die Adressierung der Segmente ist im Arbeitsspeicher des Mikroprozessors eine Tabelle angelegt, die als Global Deskriptor-Tabelle GDT bezeichnet wird. Diese Tabelle GDT weist eine Vielzahl von sogenannten Deskriptoren auf. Die Deskriptoren stellen im wesentlichen einen absoluten Adreß- und Längenwert dar, mit dem die Anfangsadresse und die Länge eines Speicherblocks im Adreßbereich des Mikroprozessors eindeutig festgelegt ist. Innerhalb der GDT kommt jedem der Deskriptoren eindeutig eine jeweilige Platznummer zu.

Je nach Verwendung werden Deskriptoren unterschiedlich bezeichnet. So sind Datensegmentdeskriptoren vorgesehen, die Speicherblöcke festlegen, in denen nur Daten stehen oder Codesegmentdeskriptoren für Speicherblöcke, in denen nur Programmcode hinterlegt ist.

Es gibt aber auch sogenannte Systemsegmentdeskriptoren, die Anfangsadresse und Länge von Speicherblöcken festlegen, die wiederum als Tabelle, ähnlich der GDT aufgebaut sind.

Unter den Systemsegmentdeskriptoren wird zwischen Local-deskriptor-Tabellen-Deskriptoren LDTD und (Task-) StatussegmentDeskriptoren TSSD unterschieden. Ein Local-deskriptor-Tabellen-Deskriptor LDTD legt einen Speicherblock fest, der Local-deskriptor-Tabelle LDT genannt wird. Eine Local-deskriptor-Tabelle LDT beinhaltet wiederum Deskriptoren, die in ihrem Aufbau denen der GDT entsprechen, allerdings sind in einer LDT keine Systemsegmentdeskriptoren möglich.

Ein (Task-) Statussegment-Deskriptor TSSD legt ein sogenanntes (Task-) Statussegment TSS fest, das ebenfalls als Tabelle aufgebaut ist, hauptsächlich aber zur Abspeicherung für mikroprozessorinterne Registerinhalte reserviert ist. In jedem (Task-) Statussegment TSS ist zudem ein Zeiger, auch LDT-Selektor genannt, vorhanden, über den eines der von der GDT festgelegten LDT'S dem betreffenden TSS zugeordnet wird. Der LDT-Selektor stellt diejenige Platznummer dar, die derjenige Local-deskriptor-Tabellen-Deskriptor in der GDT besitzt, der die zugeordnete LDT festlegt.

Der Mikroprozessor selbst stellt intern eine Vielzahl von Hardwareregistern zur Verfügung, die bei Vorgabe einer relativen Adresse eine dynamische Zuordnung der relativen Adresse zu einem Segment ermöglichen, so daß eine absolute Adresse gebildet werden kann, über die dann eine Speicherzelle im Adreßbereich des Mikroprozessors ausgewählt wird.

Zu jedem Befehl, den der Mikroprozessor zur Ausführung vorfindet, wird nach einer gegebenen Vorschrift eindeutig eines von mehreren sogenannten Segmentregistern ausgewählt. In den Segmentregistern steht entweder eine Platznummer einer GDT oder eine Platznummer einer LDT.

Da aus der Sicht des Mikroprozessors nur eine GDT vorhanden ist, deren absolute Anfangsadresse und Länge in einem mikroprozessorinternen sogenannten Global-deskriptor-Tabellen-Register GDTR eingestellt werden kann, ist mit einer Platznummer in der GDT sofort ein zugehöriger Deskriptor in der GDT ausgewählt. Da keine Platznummer für Systemsegmentdeskriptoren vergeben werden, gibt der über die Platznummer ausgewählte Deskriptor als Segmentdeskriptor die Anfangsadresse und Länge desjenigen Segmentes an, in dem eine eventuell mit dem zugrundeliegenden Befehl verbundene relative Adresse anzusprechen ist.

Ist in einem ausgewählten Segmentregister eine Platznummer einer LDT angegeben, muß zuerst festgestellt werden, in welcher der LDT'S die Platznummer einen Segmentdeskriptor auswählen soll.

Eine Verteilung der gemeinsamen Aufgaben des zugrundeliegenden Betriebssystems auf verschiedene Softwarepakete, sogenannte Tasks bzw. Programmsubsysteme, von denen zu jedem beliebigen Zeitpunkt nur genau eine laufend ist, kann durch den Mikroprozessor auf die Weise unterstützt werden, daß jeder Task ein eigenes (Task-) Statussegment TSS zugeordnet wird, in dem taskindividuelle Informationen und ein Bezug auf zur betreffenden Task gehörige Daten- und Codesegmente hinterlegt sind.

Da stets nur das zur momentan laufenden Task gehörige (Task-) Statussegment TSS vom Mikroprozessor benötigt wird, und die zu den jeweiligen anderen Tasks gehörigen (Task-) Statussegmente TSS ohne Belang sind, ist im Mikroprozessor hardwaremäßig ein sogenanntes Taskregister TS vorgesehen, in dem die Platznummer in der GDT steht, die derjenige (Task-) Statussegment-Deskriptor TSSD hat, der zur momentan laufenden Task gehört.

Mit der Auswahl eines (Task-) Statussegmentes TSS als aktuelles (Task-) Statussegment wird mittels des im betreffenden (Task-) Statussegment hinterlegten LDT Selektors eine aktuelle LDT ausgewählt. Der LDT Selektor stellt diejenige Platznummer in der GDT dar, die dem, die aktuelle LDT festlegenden Local-deskriptor-Tabellen-Deskriptor LDTD gehört.

Die aktuelle LDT wird vom Mikroprozessor bei Auswahl eines aktuellen (Task-) Statussegmentes über ein internes Local-Deskriptor-Tabellen-Register LDTR festgelegt, in dem der dem aktuellen (Task-) Statussegment entnommene LDT Selektor eingetragen wird.

Wird also in einem Segmentregister eine Platznummer in einer LDT angegeben, so ist stets die aktuelle LDT gemeint, in der dann analog zur GDT die betreffende Platznummer einen Segmentdeskriptor bezeichnet.

Für einen Taskwechsel, d. h. eine bisher bereite Task soll laufend und die bisher laufende Task soll bereit oder schlafend werden, ist in dem Mikroprozessor eine hardwaremäßige Taskumschaltung, auch Task switch oder Prozeßwechsel genannt, vorgesehen. Bei dieser Taskumschaltung werden durch interne Prozessorsteuerung die zu bisher laufenden Task gehörenden Daten in dem der Task zugehörigen (Task-) Statussegment abgespeichert und durch die zur nunmehr laufenden Task gehörenden Daten ersetzt. Das Taskregister TR und das Local-deskriptor-Tabellen-Register LDTR wird auf das aktuelle (Task-) Statussegment bzw. auf die aktuelle LDT eingestellt.

Zur sofortigen Bearbeitung von Software- und Hardwareereignissen wird dem Mikroprozessor eine im Speicherbereich hinterlegte weitere Tabelle, eine sogenannte Interrupt-deskriptor-Tabelle IDT zur Verfügung gestellt. In der IDT sind Verweise auf sämtliche, beim Auftreten eines Ereignisses (auch Interrupt, Anreiz oder Unterbrechungsanforderung genannt) in Frage kommenden Interrupt-Routinen (auch Interrupt Handler genannt) in Form jeweils einer Platznummer in der GDT bzw. einer LDT und einer Relativadresse hinterlegt. Unter der betreffenden Platznummer in der GDT bzw. einer LDT befindet sich ein Codesegmentdeskriptor, der die Adresse für ein, eine jeweilige Interrupt-Routine beinhaltendes Codesegment darstellt. Die zugehörige Relativadresse ist die Anfangsadresse der Interrupt-Routine innerhalb dieses Codesegmentes.

Beim Auftreten eines Ereignisses wird eine, das betreffende Ereignis identifizierende Kennummer als Platznummer in der IDT benutzt, um über die GDT bzw. eine LDT die dem Ereignis zugehörige Interrupt-Routine auszuwählen.

Zur Festlegung der IDT im Adreßbereich des Mikroprozessors wird in einem mikroprozessorinternen Register, im sogenannten Interrupt-deskriptor-Tabellen-Register IDTR, die absolute Anfangsadresse und die Länge der IDT eingestellt.

Mit Unterstützung solcher über Tabellen gesteuerten Adressierungsmechanismen ist die Idle Task und ein Programmsubsystem des Echtzeitbetriebssystems als Schleusensubsystem SUB1 bzw. weiteres Schleusensubsystem SUB2 ausgebildet, um den Systemprozessor dem Teilnehmer- und dem Echtzeitbetriebssystem zur Verfügung stellen zu können.

Voraussetzung dafür ist, daß die wesentlichen Teile beider Betriebssysteme, also der Betriebssystemprogramme samt zugehöriger Daten im Systemspeicher des Systemprozessors hinterlegt sind. Da beide Betriebssysteme voneinander unabhängige Programmstrukturen aufweisen und prinzipiell eigenständig sind, hat jedes der Betriebssysteme eigene Adressierungstabellen in Form von jeweils genau einer GDT und IDT sowie eventuell mehrere (Task-) Statussegmente und Local-deskriptor-Tabellen LDT.

Zur besseren Unterscheidung wird die dem Echtzeitbetriebssystem zugeordnete GDT auch als Systemtabellenspeicher und die IDT als weiterer Systemtabellenspeicher bezeichnet; die dem Teilnehmerbetriebssystem zugeordnete GDT wird Modultabellenspeicher und die IDT weiterer Modultabellenspeicher genannt.

Um ein Verständnis der zur Erfindung führenden programmtechnischen Maßnahmen nicht unnötig zu erschweren, wird im folgenden von einem vereinfachten Konzept ausgegangen, bei dem die Anzahl der (Task-) Statussegmente beider Betriebssysteme auf jeweils genau ein (Task-) Statussegment TSS beschränkt ist, weshalb beide Betriebssysteme aus der Sicht des Mikroprozessors als jeweils eine Task behandelt werden können. Eine Task-Umschaltung innerhalb der einzelnen Betriebssysteme wird also ohne die taskspezifische Unterstützung der 80386 Mikroprozessorhardware vorgenommen.

In dem Systemtabellenspeicher (= GDT des Echtzeitbetriebssystems), wie auch in dem Modultabellenspeicher (= GDT des Teilnehmerbetriebssystems) sind neben einer Vielzahl von betriebssystemindividuellen Deskriptoren auch gemeinsame Deskriptoren, sogenannte Kommunikationsdeskriptoren, vorhanden, die jeweils in identischer Form in beiden GDT's vertreten sind. Diese gemeinsamen Deskriptoren sind in den GDT's unter gleichen Platznummern hinterlegt. Als gemeinsame Deskriptoren sind zunächst ein Datensegment-, ein Statussegment- und wenigstens ein Codesegment-Deskriptor von Interesse.

Die beiden gemeinsamen Datensegmentdeskriptoren legen genau ein Datensegment fest, das im folgenden Interkommunikations-Datensegment genannt wird, weil es von beiden Betriebssystemen erreichbar ist und zur Datenübergabe benützt werden kann.

Die beiden gemeinsamen Codesegmentdeskriptoren legen ein Codesegment fest, in dem Programmsequenzen gespeichert sind, die bei einem Übergang von einem zum anderen Betriebssystem abgearbeitet werden. Dieses Codesegment wird im wesentlichen von den beiden Schleusensubsystemen des Echtzeitbetriebssystems benützt, da der Übergang in das Teilnehmerbetriebssystem bei laufender Idle Task (Schleusensubsystem SUB1) bzw. laufendem weiterem Schleusensubsystem SUB2 erfolgt.

Die beiden gemeinsamen Statussegmentdeskriptoren legen das zum Echtzeitbetriebssystem gehörige (Task-) Statussegment fest. Die Platznummer der gemeinsamen Statutssegmentdeskriptoren wird zusammen mit den Anfangsadressen und Längen beider GDT's und IDT's vom Echtzeitbetriebssystem aus im Interkommunikationsdatensegment hinterlegt. Außerdem wird im Interkommunikationsdatensegment die Platznummer in dem Modultabellenspeicher eingetragen, an der sich der Statussegmentdeskriptor des Teilnehmerbetriebssystems befindet.

Da für ein Inbetriebsetzen des gesamten Kommunikationssystems der Zentralprozessor, im folgenden auch zentrale Recheneinheit genannt, dem Echtzeitbetriebssystem zur Verfügung stehen muß, wird davon ausgegangen, daß vor einem ersten Übergang in das Teilnehmerbetriebssystem sämtliche mikroprozessorinterne Register den Anforderungen des Echtzeitbetriebssystems entsprechend eingestellt sind.

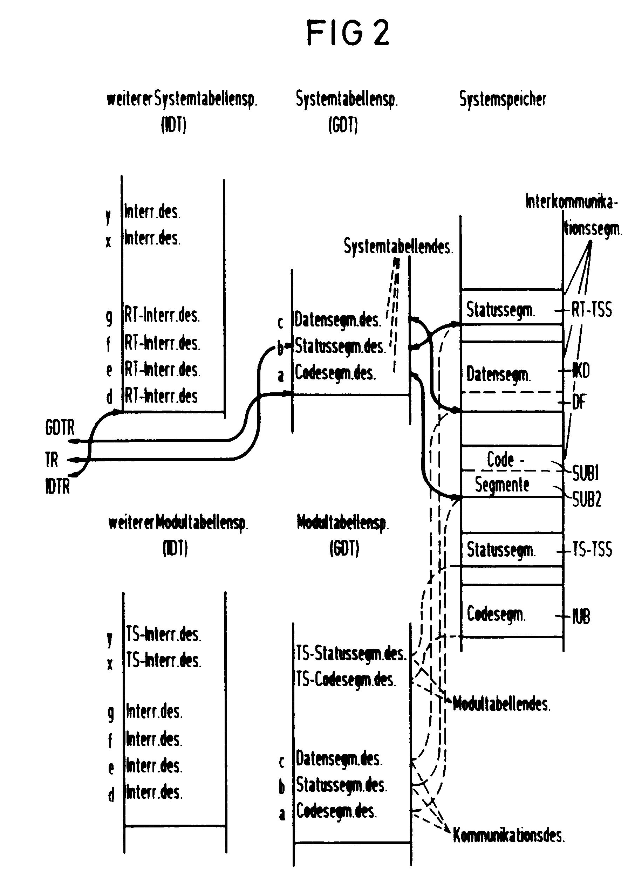

In den FIG 2 bis 4 sind schematisch jeweils die Deskriptoren in den System- bzw. Modultabellenspeichern sowie die zugeordneten Speichersegmente im Systemspeicher dargestellt. Die eingezeichneten Verweispfeile in den FIG 2 bis 4 stellen die bei den in FIG 1 markierten Schritten II bis IV jeweils gültigen Deskriptorbezüge dar.

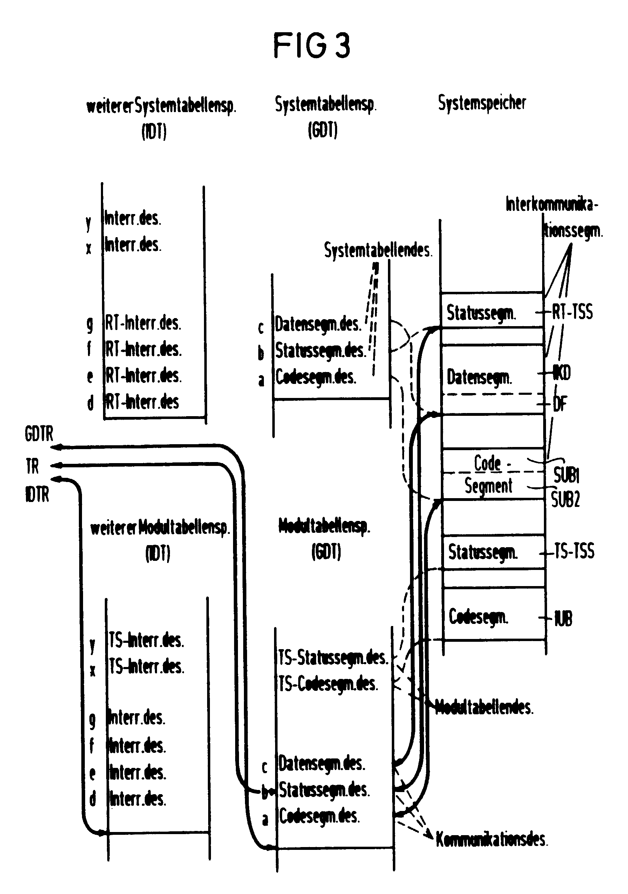

Das weitere Schleusensubsystem SUB2 wird vom Task-Scheduler TSK des Echtzeit-Betriebssystems dem Zentralprozessor zur Abarbeitung zugewiesen, wenn das weitere Schleusensubsystem SUB2 aufgrund eines eingetroffenen ersten periodischen Anreizes ablaufbereit wird, und kein gegenüber dem weiteren Schleusensubsystem SUB2 höherpriores Programmsubsystem ablaufbereit ist. Sobald das weitere Schleusensubsystem SUB2 dem Zentralprozessor zur Abarbeitung zugewiesen ist, d. h. einen laufenden Zustand eingenommen hat (es gelten die in FIG 2 dargestellten Deskriptorbezüge), veranlassen programmtechnische Steueranweisungen im weiteren Schleusensubsystem SUB2, daß das systemprozessorinterne Interrupt-Deskriptor-Tabellenregister IDTR und das Global-Deskriptor-Tabellenregister GDTR mit denen im Interkommunikations-Datensegment IKD hinterlegten Anfangsadressen des Modultabellenspeichers und des weiteren Modultabellenspeichers (GDT und IDT des Teilnehmerbetriebssystems) überschrieben werden. Es gelten dann die in FIG 3 dargestellten Deskriptorbezüge.

Da im Modultabellenspeicher gemeinsame Deskriptoren für das Codesegment des Schleusensubsystems SUB1 bzw. des weiteren Schleusensubsystems SUB2, für das Interkommunikations-Datensegment IKD und für das Statussegment RT-TSS des Echtzeitbetriebssystems vorhanden sind, bezieht der Zentralprozessor immer noch seine Anweisungen aus dem Codesegment des weiteren Schleusensubsystems SUB2.

Außer dem Codesegment für das weitere Schleusensubsystem SUB2 ist in den FIG 2 bis 4 auch noch das Codesegment für die als Schleusensubsystem SUB1 ausgebildete Idle Task angedeutet. Dieses Codesegment ist dann relevant, wenn der Übergang zwischen den beiden Betriebssystemen über die als Schleusensubsystem SUB1 ausgebildete Idle Task erfolgt.

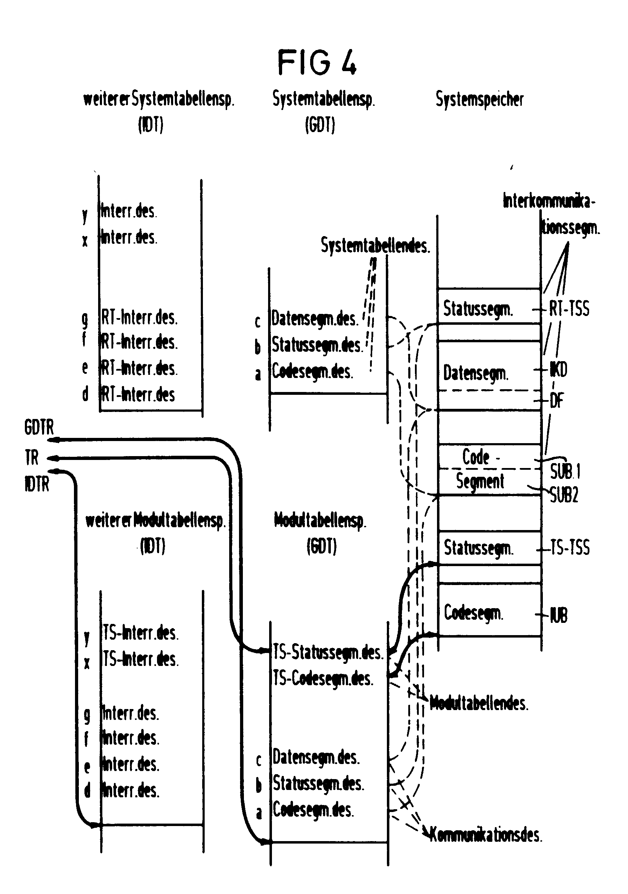

Das Programm des weiteren Schleusensubsystems SUB2 veranlaßt im weiteren eine Taskumschaltung (Prozeßwechsel) auf den TS-Statussegment-Deskriptor des Teilnehmerbetriebssystems, dessen Platznummer (im Modultabellenspeicher) im Interkommunikations-datensegment IKD hinterlegt ist. Bei dieser Taskumschaltung, die mit einem Mikroprozessorsprungbefehl ausgelöst wird, werden vom Mikroprozessor automatisch die zur momentan laufenden Task des Echtzeit-Betriebssystems gehörenden Mikroprozessorregisterinhalte, z. B. Segmentregister, Befehlszähler, nicht aber IDTR und GDTR, in das Statussegment RT-TSS des Echtzeit-Betriebssystems eingetragen und durch die entsprechenden Werte aus dem zum Teilnehmerbetriebssystem gehörigen Statussegment TS-TSS ersetzt. Im Taskregister TR wird die Platznummer des zum Teilnehmerbetriebssystem gehörigen TS-Statussegment-Deskriptors eingetragen. Es gelten dann die in FIG 4 dargestellten Deskriptorbezüge.

Nach dieser Taskumschaltung bezieht der Zentralprozessor seine Anweisungen aus einem, dem Teilnehmerbetriebssystem zugehörigen Codesegment, da auch die Segmentregister der Taskumschaltung neu geladen wurden.

Dieses Codesegment ist im Prinzip zum Task-Scheduler TSKT des Teilnehmerbetriebssystems zuzuordnen und beinhaltet im wesentlichen die Interrupt-Übergangsroutine IUB, die zur programmtechnischen Anbindung an die Schleusensubsysteme SUB1, SUB2 von Seiten des Teilnehmerbetriebssystems vorgesehen ist. Auf die Interrupt-Übergangsroutine IUB wird im folgenden noch detaillierter eingegangen.

In beiden Betriebssystemen werden interne Taskwechsel beim Auftreten von Ereignissen durchgeführt, die den Task-Schedulern TSK, TSKT in Form von Hard- bzw. Software-Interrupts mitgeteilt werden. Die Task-Scheduler TSK, TSKT weisen zur Behandlung unterschiedliche Interrupt-Quellen, sogenannte Interrupt-Routinen, auf, die anhand der beim Auftreten eines Interrupts mitgegebenen und dem betreffenden Interrupt identifizierenden Kennummer x, y, d, e, f, g ausgewählt werden. Obwohl beide Betriebssysteme auf Hard- bzw. Softwareereignisse reagieren müssen, ist es für das Echtzeitbetriebssystem im Unterschied zu dem Teilnehmerbetriebssystem von entscheidender Bedeutung, beim Auftreten eines wichtigen Ereignisses sofort reagieren zu können. Andererseits treten in dem Echtzeit-Betriebssystem der Kommunikationsanlage eine Vielzahl von Ereignissen auf, die zwar eine Bearbeitung erfordern, diese aber nicht so dringend ist, daß es zu Funktionsstörungen im System führt, wenn ihre Bearbeitung etwas verzögert wird.

Eine solche Verzögerung der Abarbeitung von zeitlich relativ unkritischen Ereignissen wird in Kauf genommen, um gemäß der Aufgabe der vorliegenden Erfindung für das Teilnehmerbetriebssystem eine gewisse Mindestkapazität der Rechenleistung des Zentralprozessors zukommen zu lassen. Dem für einen Übergang zwischen den Betriebssystemen als weiteres Schleusensubsystem SUB2 ausgebildeten Programmsubsystem wird deshalb im Echtzeit-betriebssystem ein Prioritätswert PR zugeordnet, mit dem sichergestellt ist, daß die zur Bearbeitung zeitkritischer Ereignisse vorgesehenen Programmsubsysteme PSS Vorrang haben, und das weitere Schleusensubsystem SUB2 gegenüber den anderen Programmsubsystemen PSS, die zur Bearbeitung zeitlich unkritischer Ereignisse vorgesehen sind, eine höhere Priorität aufweist.

Aufgrund dieser Prioritätswertvergabe muß beim Auftreten eines, das Echtzeit-Betriebssystem betreffenden Interrupts, in einem Zustand, in dem die zentrale Recheneinheit gerade dem Teilnehmerbetriebssystem zugeteilt ist, unterschieden werden, ob dieser aufgetretene Interrupt ein zeitkritisches Ereignis (höhere Priorität als das weitere Schleusensubsystem SUB2) oder ein zeitunkritisches Ereignis (niedrigere Priorität als das weitere Schleusensubsystem SUB2) signalisiert. Im ersteren Fall wird bei Auftreten eines Interrupts die Interrupt-Übergangsroutine IUB des Teilnehmerbetriebssystems ausgewählt, die sofort einen Ubergang der zentralen Recheneinheit zurück zum weiteren Schleusensubsystem SUB2 des Echtzeit-Betriebssystems einleitet. Im zweiteren Falle wird die Bearbeitung einer Interrupt-Rettungsroutine TS-IRR des Teilnehmerbetriebssystems eingeleitet, die lediglich die Kennummer des das Echtzeit-Betriebssystem betreffenden Interrupts im Interkommunikations-Datensegment IKD hinterlegt.

Zu den an das Echtzeitbetriebssystem gerichteten hochprioren Anreizen zählt auch ein, dem ersten periodischen Anreiz nachfolgender zweiter periodischer Anreiz. Gegenüber dem ersten periodischen Anreiz, der dazu dient, das weitere Schleusensubsystem SUB2 in einen ablaufbereiten Zustand zu versetzen, dient der zweite periodische Anreiz dazu, den Übergang vom Teilnehmerbetriebssystem zurück in das Echtzeitbetriebssystem zu veranlassen.

Sobald also ein das Echtzeitbetriebssystem betreffender und gegenüber dem weiteren Schleusensubsystem SUB2 höherpriorisierter Anreiz auftritt, veranlaßt die Interrupt-Übergangsroutine IUB nach Abspeichern der den betreffenden Interrupt identifizierenden Kennummer im Interkommunikations-Datensegment IKD einen Prozeßwechsel auf den Statussegment-Deskriptor des Echtzeit-Betriebssystems. Die Platznummer dieses StatussegmentDeskriptors (in den GDT's) ist im Interkommunikations-Datensegment IKD hinterlegt. Es gelten wieder die in FIG 3 dargestellten Deskriptorbezüge.

Nach diesem Prozeßwechsel, der ebenfalls durch einen Sprungbefehl des Mikroprozessors ausgelöst wird, bezieht die zentrale Recheneinheit ihre Anweisungen wieder aus dem Codesegment des weiteren Schleusensubsystems SUB2, und zwar von der Stelle, die dem Prozeßwechsel zum Teilnehmerbetriebssystem folgt.

An dieser Stelle wird durch eine Steueranweisung veranlaßt, daß die Registerinhalte des GDTR und IDTR wieder auf die im Interkommunikations-Datensegment IKD hinterlegten, zum Echtzeit-Betriebssystem gehörigen Werte eingestellt werden. Es gelten wieder die in FIG 2 dargestellten Deskriptorbezüge.

Im weiteren wird die unmittelbar vorher von der Interrupt-Ubergangsroutine IUB oder die von der Interrupt-Rettungsroutine TS-IRR des Teilnehmerbetriebssystems im Interkommunikations-Datensegment IKD hinterlegte Kennummer bzw. Kennummern der das Echtzeitbetriebssystem betreffenden Interrupts ausgelesen und nach einer eventuellen Umcodierung dem Task-Scheduler TSK des Echtzeitbetriebssystems im Zusammenhang mit eventuellen Software-Interrupts mitgeteilt.

Das weitere Schleusensubsystem SUB2 beendet sich anschließend dadurch, daß es für eine gewisse Zeitspanne in einen schlafenden Zustand übergeht. Für den Task-Scheduler TSK ist damit die Bearbeitung des weiteren Schleusensubsystems SUB2 abgeschlossen. Erst bei Auftreten des nächsten periodischen Anreizes wird das weitere Schleusensubsystem SUB2 wieder ablaufbereit.

Bei aktivem Echtzeit-Betriebssystem können natürlich auch Interrupts (Anreize) auftreten, die das Teilnehmerbetriebssystem betreffen. Diese Interrupts können dann allerdings nicht sofort bearbeitet werden, ihr Auftreten muß aber für eine durch das Teilnehmerbetriebssystem zu erfolgende Auswertung registriert werden.

Um beim Auftreten eines Interrupts sofort dessen Betriebssystemzugehörigkeit feststellen zu können, sind die den Interrupts des einen Betriebssystems mitgegebenen Kennummern x,y für das Teilnehmerbetriebssystem, d, e, f, g für das Echtzeitbetriebssystem, zu denen die Interrupts des jeweiligen anderen Betriebssystems verschieden.

Da die Kennummern der Interrupts als Platznummern in einer IDT verwendet werden, um das Ansprungsziel einer, einem jeweiligen Interrupt zugeordneten Interruptroutine zu ermitteln, und jedes der Betriebssysteme eine eigene IDT besitzt, sind in den IDT's beider Betriebssysteme Platznummern sowohl für betriebssystemeigene als auch Platznummern für betriebssystemfremde Interrupts vorgesehen.

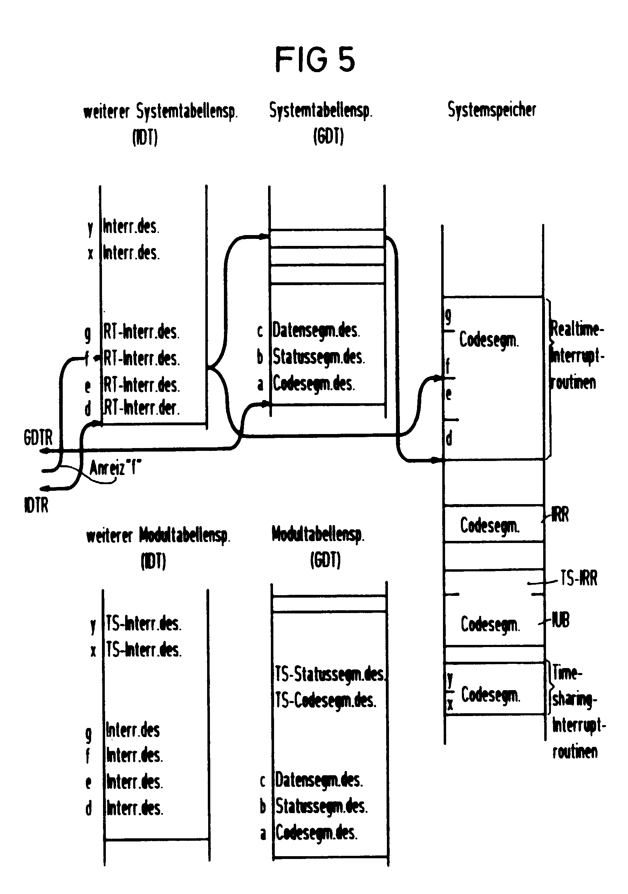

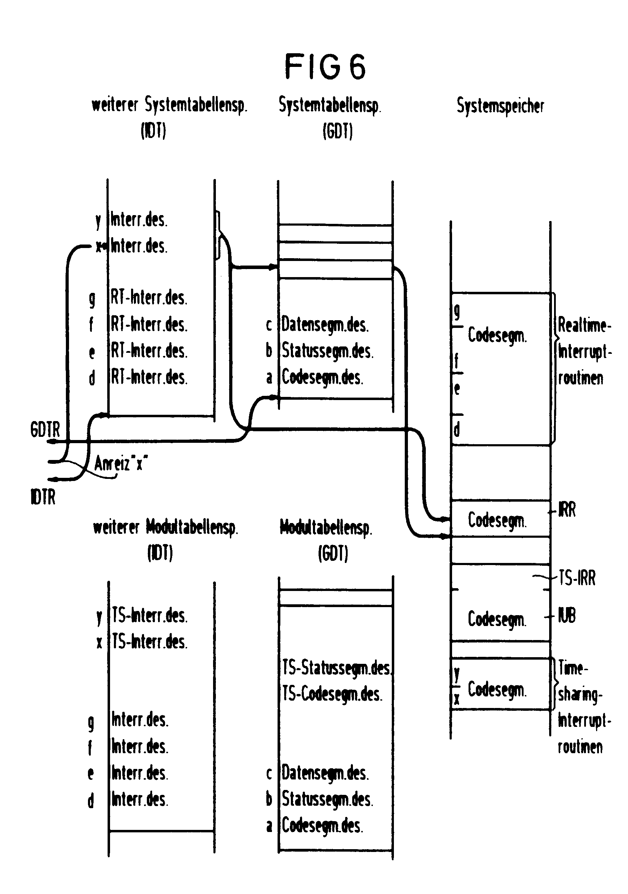

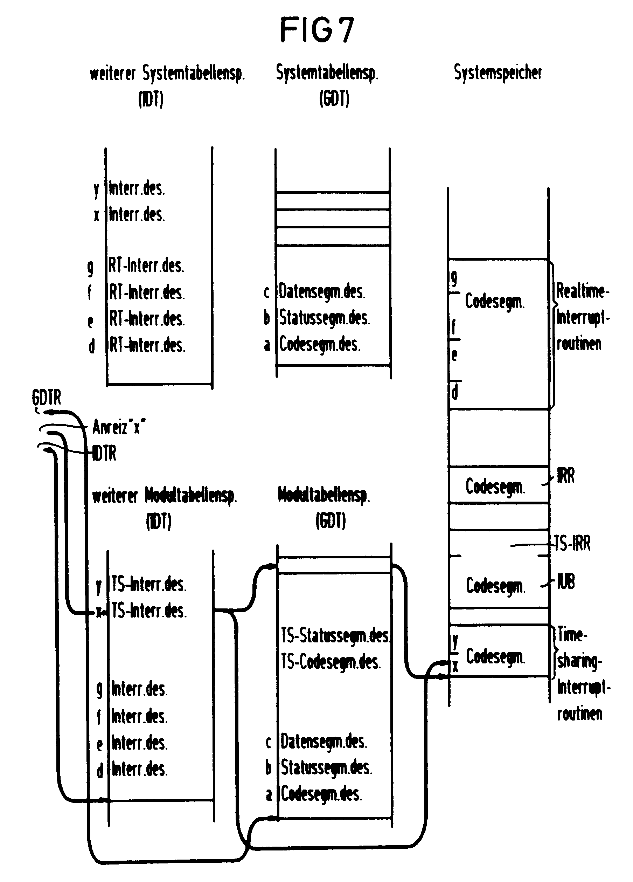

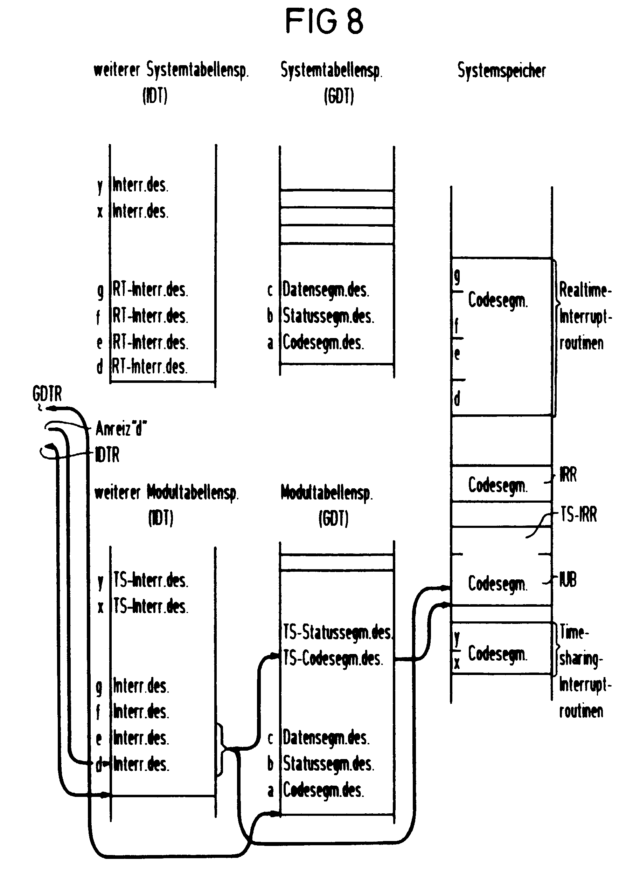

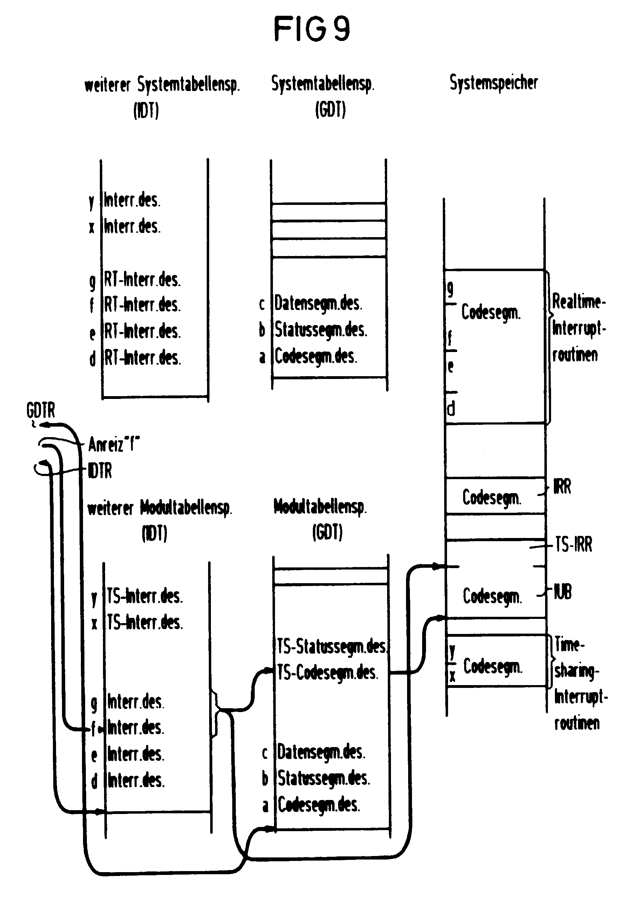

In den FIG 5 bis 9 sind jeweils Auszüge aus den System- bzw. Modultabellenspeichern mit den darin für eine Unterbrechungsbearbeitung relevanten Deskriptoren sowie deren Bezüge auf die verschiedenen Interrupt-Routinen schematisch dargestellt. Bei aktivem Echtzeitbetriebssystem gelten für systemeigene Interrupts, d. h. für auf das Echtzeitbetriebssystem gerichtete Interrupts, die in FIG 5 und für auf das Teilnehmerbetriebssystem gerichtete Interrupts die in FIG 6 dargestellten Deskriptorbezüge. Bei aktivem Teilnehmerbetriebssystem gelten für systemeigene, d. h. auf das Teilnehmerbetriebssystem bezogene Interrupts, die in FIG 7 und für systemfremde, d. h. auf das Echtzeitbetriebssystem bezogene Interrupts die in FIG 8 oder 9 dargestellten Deskriptorbezüge.

Unter den Platznummern der betriebssystemeigenen Interrupts sind in den beiden IDT's Verweise auf die betriebssystemindividuellen Interrupt-Routinen hinterlegt. Unter den Platznummern der betriebssystemeigenen Interrupts d, e, f, g sind in der IDT des Echtzeitbetriebssystems Verweise auf die zugehörigen Interruptroutinen hinterlegt. Einer dieser betriebssystemeigenen Interrupts ist mit dem ersten periodischen Anreiz PA1 identisch, der eine Abarbeitung des weiteren Schleusensubsystems SUB2 einleiten soll. In der IDT des Echtzeitbetriebssystems (= weiterer Systemtabellenspeicher) sind unter den Platznummern der betriebssystemfremden Interrupts jedoch Verweise auf eine gemeinsame Interrupt-Rettungsroutine IRR hinterlegt, die bei aktivem Echtzeitbetriebssystem auf einen, das Teilnehmerbetriebssystem betreffenden Interrupt x,y hin (die in FIG 6 dargestellten Deskriptorbezüge gelten) lediglich die diesem Interrupt zugeordnete Kennummer x, y in das Interkommunikations-Datensegment IKD einträgt.

Bei aktivem Teilnehmerbetriebssystem führen betriebssystemeigene Anreize x zur Abarbeitung der zugehörigen Interruptroutinen. Es gelten die in FIG 7 dargestellten Deskriptorbezüge.

In der IDT des Teilnehmerbetriebssystems (= weiterer Modultabellenspeicher) sind unter den betriebssystemfremden Platznummern d, e, f, g Verweise hinterlegt, die auf die Interrupt-Übergangsroutine IUB oder auf die Interrupt-Rettungsroutine im Teilnehmerbetriebssystem TS-IRR verweisen. Im vorliegenden Ausführungsbeispiel sind die Platznummern d, e für Interrupts vorgesehen, die eine gegenüber dem weiteren Schleusensubsystem SUB2 höhere Priorität im Echtzeitbetriebssystem aufweisen und deshalb ihr Auftreten bei aktivem Teilnehmerbetriebssystem sofort zum Übergang in das Echtzeitbetriebssystem führen muß (siehe hierzu die in FIG 8 dargestellten Deskriptorbezüge). Einer dieser Interrupts mit den Platznummern d, e wird vom zweiten periodischen Anreiz PA2 ausgelöst, der eine Rückkehr in das Echtzeit-betriebssystem einleitet.

Die bereits erwähnte Interrupt-Übergangsroutine IUB bewirkt mit einer ersten Programmsequenz diesen Übergang an das weitere Schleusensubsystem SUB2 bzw. Schleusensubsystem SUB, je nach dem, über welches der beiden Schleusensubsysteme der Übergang vom Echtzeitbetriebssystem in das Teilnehmerbetriebssystem ausgelöst wurde.

In einer zweiten Programmsequenz der Interrupt-Ubergangsroutine IUB wird von der zentralen Recheneinheit unmittelbar nach einer Taskumschaltung zum TS-Statussegmentdeskriptor des Teilnehmerbetriebssystems abgearbeitet. Diese zweite Programmsequenz wird auch Anreizermittlung genannt, da sie für eine Auswertung der im Interkommunikations-Datensegment IKD von der Interrupt-Rettungsroutine IRR des Echtzeit-Betriebssystems eingetragenen Kennnummern der das Teilnehmerbetriebssystem betreffenden Interrupts x, y zuständig ist.

Von den betriebssystemfremden Platznummern d, e, f, g in der IDT des Teilnehmerbetriebssystems (= weiterer Modultabellenspeicher) sind unter den Platznummern f und g Verweise auf die Interrupt-Rettungsroutine des Teilnehmerbetriebssystems TS-IRR hinterlegt. Es gelten die in FIG 9 dargestellten Deskriptorbezüge.

Diese Platznummern f und g sind für Anreize vorgesehen, die auf Programmsubsysteme gerichtet sind, deren Priorität gegenüber der des weiteren Schleusensubsystems SUB2 niedriger ist; bei aktivem Teilnehmerbetriebssystem müssen diese Programmsubsysteme also nicht unbedingt sofort bearbeitet werden. Bei Auftreten eines solchen Anreizes f wird die Interrupt-Rettungsroutine im Teilnehmerbetriebssystem TS-IRR abgearbeitet, die lediglich die Kennummer des betreffenden Anreizes im Interkommunikations-Datensegment IKD hinterlegt.

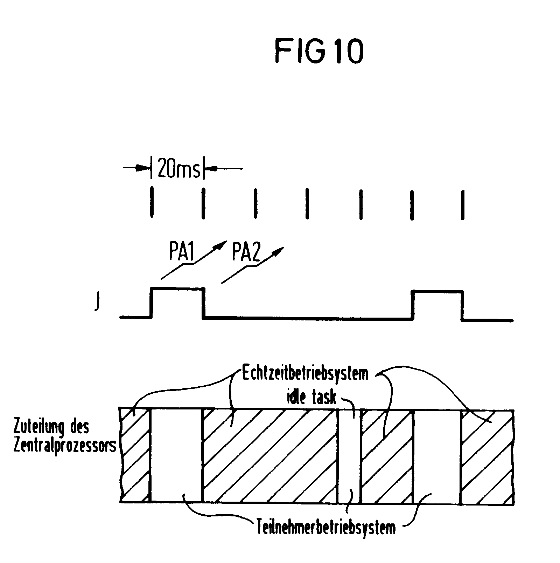

In FIG 10 ist anhand eines Zeitdiagrammes eine mögliche Verteilung der Rechenkapazität der zentralen Einheit auf die beiden Betriebssysteme innerhalb einer Periodendauer des ersten periodischen Anreizes dargestellt. Der erste und zweite periodische Anreiz wird aus einem zeitsynchronen Signalimpuls erzeugt, dessen Tastverhältnis 1 : 4 ist. Die Periodendauer kann z. B. 100 ms betragen. Der erste periodische Anreiz PA1 wird durch die steigende Flanke und der zweite periodische Anreiz PA2 durch die fallende Flanke des Impulses I erzeugt. Läßt man die Rechenkapazität außer Betracht, die aufgrund eines Übergangs mit Hilfe der als Schleusensubsystem ausgebildete Idle Task erfolgt, so wird im vorliegenden Beispiel, sofern man etwaige Ausnahmefälle nicht berücksichtigt, die Rechenkapazität der verarbeitenden Einheit zu 20 % dem Teilnehmerbetriebssystem zugeteilt. Dieser prozentuale Anteil erhöht sich, wenn zusätzlich noch die Idle Task im Echtzeitbetriebssystem abgearbeitet wird. Durch Veränderung des Tastverhältnisses läßt sich der dem Teilnehmerbetriebssystem zukommende Anteil der Rechenkapazität beliebig verändern.

## Patentansprüche

1. Modular strukturiertes ISDN-Kommunikationssystem
- mit wenigstens einer, ein Koppelnetz aufweisenden Durchschalteeinheit, an die über Peripheriemodule Geräte und Netze anschließbar sind,
- mit einem speicherprogrammierten Systemprozessor,
-- der ein Echtzeitbetriebssystem aufweist zur Steuerung von zur Ausführung kommunikationstechnikspezifischer Funktionen vorgesehener Programmsubsysteme (PPS) und eines Leerlaufprogrammsubsystems, das als Schleusensubsystem (SUB1) für einen Übergang zu einem Teilnehmerbetriebssystem ausgebildet ist,
- mit einem Systemspeicher, der über Deskriptoren adressierbare Speichersegmente aufweist,
- mit einem Systemtabellenspeicher (GDT), der auf die Speichersegmente des Echtzeitbetriebssystems bezogene Systemtabellendeskriptoren enthält,
- mit einem weiteren Systemtabellenspeicher (IDT), der für das Echtzeitbetriebssystem betreffende Anreize RT-Interruptdeskriptoren enthält,
- mit einem alternativ zum Systemtabellenspeicher auswählbaren Modultabellenspeicher (GDT), der auf Speichersegmente des Teilnehmerbetriebssystems bezogene Modultabellendeskriptoren enthält,
-- und der auf Interkommunikations-Segmente des Echtzeitbetriebssystems bezogene Kommunikationsdeskriptoren enthält, die zu den im Systemtabellenspeicher enthaltenen und auf die Interkommunikations-Segmente bezogenen Systemtabellendeskriptoren identisch interpretierbar sind und unter denen sich wenigstens
-- ein Codesegmentdeskriptor für den iugriff auf das Codesegment des Schleusensubsystems (SUB1),
-- ein Statussegmentdeskriptor für den Zugriff auf ein dem Schleusensubsystem zugeordnetes Statussegment im Echtzeitbetriebssystem und
-- ein Datensegmentdeskriptor für den Zugriff auf ein Interkommunikations-Datensegment befindet, das die von jedem der beiden Betriebssysteme bei einem Übergang zum jeweiligen anderen Betriebssystem benötigten Eingangsinformationen zwischenspeichert,
- mit einem alternativ zum weiteren Systemtabellenspeicher auswählbaren weiteren Modultabellenspeicher (IDT), der für das Teilnehmerbetriebssystem betreffende Anreize TS-Interruptdeskriptoren enthält,
- und mit Steueranweisungen im Schleusensubsystem (SUB1), die bei Aktivierung des Schleusensubsystems einen Zuordnungswechsel des Systemprozessors von den Systemtabellenspeichern auf die Modultabellenspeicher auslösen und anschließend unter Aufruf eines Statussegmentdeskriptors einen Prozeßwechsel in die Interruptübergangsroutine (IUB) bewirken, die daraufhin beendet wird,
- mit Steueranweisungen in der Interruptübergangsroutine (IUB), die bei Aktivierung der Interruptübergangsroutine (IUB) unter Aufruf des Kommunikations-Statussegmentdeskriptors einen Prozeßwechsel in das Schleusensubsystem (SUB1) einleiten,
- mit weiteren Steueranweisungen im Schleusensubsystem (SUB1), die einen Zuordnungswechsel des Systemprozessors von den Modultabellenspeichern zu den Systemtabellenspeichern bewirken,
**dadurch gekennzeichnet,**
daß im Echtzeitbetriebssystem ein Programmsubsystem (PSS) mit vergleichsweise hoher Priorität als weiteres Schleusensubsystem (SUB2) ausgebildet ist,
daß das weitere Schleusensubsystem (SUB2) jeweils bei Eintreffen eines ersten periodischen Anreizes (PA1) einen ablaufbereiten Zustand einnimmt, um im Echtzeitbetriebssystem dem Systemprozessor zur Ausführung zugewiesen zu werden,
daß der weitere Modultabellenspeicher wenigstens für einen dem ersten periodischen Anreiz (PA1) nachfolgenden zweiten periodischen Anreiz (PA2) einen Interruptdeskriptor enthält, der sich auf die Interruptübergangsroutine (IUB) bezieht,
daß der weitere Modultabellenspeicher für das Echtzeitbetriebssystem betreffende Anreize Interruptdeskriptoren enthält, die sich auf eine Interruptrettungsroutine im Teilnehmerbetriebssystem (TS-IRR) beziehen und
daß nach dem Zuordnungswechsel des Systemprozessors von den Modultabellenspeichern zu den Systemtabellenspeichern das weitere Schleusensubsystem (SUB2) einen im Echtzeitbetriebssystem als nicht ablaufbereiten Taskzustand vorgesehenen schlafenden Zustand einnimmt.

2. Modular strukturiertes ISDN-Kommunikationssystem nach Anspruch 1,
**dadurch gekennzeichnet,**
daß die Interruptrettungsroutine im Teilnehmerbetriebssystem (TS-IRR) die das Echtzeitbetriebssystem betreffenden Anreize im Interkommunikationsdatensegment abspeichert.

3. Modular strukturiertes ISDN-Kommunikationssystem nach Anspruch 2,
**dadurch gekennzeichnet,**
daß im weiteren Schleusensubsystem (SUB2) die von der Interrupt-rettungsroutine des Teilnehmerbetriebssystems (TS-IRR) im Interkommunikationsdatensegment gespeicherten Anreize ermittelt werden.

4. Modular strukturiertes ISDN-Kommunikationssystem nach wenigstens einem der Ansprüche 1 bis 3,
**dadurch gekennzeichnet,**
daß die Interruptübergangsroutine (IUB) für beide Schleusensubsysteme (SUB1, SUB2) verfügbar ist.

5. Modular strukturiertes ISDN-Kommunikationssystem nach wenigstens einem der vorhergehenden Ansprüche,
**dadurch gekennzeichnet,**
daß sich der erste periodische Anreiz (PA1) mit einer Periodendauer wiederholt, die ein Vielfaches des zeitlichen Abstandes zwischen erstem und zweitem periodischen Anreiz (PA1, PA2) ist.

6. Modular strukturiertes ISDN-Kommunikationssystem nach wenigstens einem der vorhergehenden Ansprüche,
**dadurch gekennzeichnet,**
daß der erste und zweite periodische Anreiz (PA1, PA2) aus jeweils einer der beiden Signalflanken eines periodischen Signalimpulses (I) erzeugt werden.

## Claims

1. Modular-structured ISDN communications system
- having at least one switching unit which has a switching network and to which devices and networks can be connected via peripheral modules,
- having a programmable logic system processor,
-- which has a real-time operating system for controlling program subsystems (PPS) which are provided for carrying out functions specific for communications engineering, and for controlling a no-load program subsystem which is designed as a gateway subsystem (SUB1) for a gateway to a subscriber operating system,
- having a system memory which has memory segments that can be addressed via descriptors,
- having a system table memory (GDT) which contains system table descriptors related to the memory segments of the real-time operating system,
- having a further system table memory (IDT) which contains stimulus RT interrupt descriptors relating to the real-time operating system
- having a module table memory (GDT) which can be selected as an alternative to the system table memory and contains module table descriptors related to memory segments of the subscriber operating system,
-- and which contains communication descriptors which are related to intercommunication segments of the real-time operating system, can be interpreted in an identical manner to the system table descriptors contained in the system table memory and related to the intercommunication segments and at which at least
--- a code segment descriptor for access to the code segment of the gateway subsystem (SUB1),
--- a status segment descriptor for access to a status segment allocated to the gateway subsystem in the real-time operating system and
--- a data segment descriptor for access to an intercommunication data segment are located, which buffer stores the input information required by each of the two operating systems for a gateway to the respective other operating system,
- having a further module table memory (IDT) which can be selected as an alternative to the further system table memory and contains stimulus TS interrupt descriptors relating to the subscriber operating system,
- and having control instructions in the gateway subsystem (SUB1) which, on activation of the gateway subsystem, initiate an allocation change of the system processor from the system table memories to the module table memories and, subsequently, calling up a status segment descriptor, cause a process change to the interrupt gateway routine (IUB), which ends as a result of this
- having control instructions in the interrupt gateway routine (IUB) which, on activation of the interrupt gateway routine (IUB) and calling up the communication status segment descriptor, initiate a process change to the gateway subsystem (SUB1)
- having other control instructions in the gateway subsystem (SUB1) which cause an allocation change of the system processor from the module table memories to the system table memories,
characterized
in that a program subsystem (PSS) having higher priority than another gateway subsystem (SUB2) is formed in the real-time operating system,
in that the other gateway subsystem (SUB2) in each case assumes a ready-to-run state whenever a first periodic stimulus (PA1) arrives, in order to be allocated to the system processor for execution in the real-time operating system,
in that the other module table memory contains at least one interrupt descriptor, which relates to the interrupt gateway routine (IUB) for a second periodic stimulus (PA2) which follows the first periodic stimulus (PA1),
in that the other module table memory contains interrupt descriptors, which relate to an interrupt rescue routine in the subscriber operating system (TS-IRR), for stimuli relating to the real-time operating system, and
in that, after the allocation change of the system processor from the module table memories to the system table memories, the other gateway subsystem (SUB2) assumes a sleeping state which is provided as a non-ready-to-run task state in the real-time operating system.

2. Modular-structured ISDN communications system according to Claim 1,
characterized
in that the interrupt rescue routine in the subscriber operating system (TS-IRR) stores in the intercommunication data segment the stimuli relating to the real-time operating system.

3. Modular-structured ISDN communications system according to Claim 2,
characterized
in that the other gateway subsystem (SUB2) determines the stimuli which are stored by the interrupt rescue routine of the subscriber operating system (TS-IRR) in the intercommunication data segment.

4. Modular-structured ISDN communications system according to at least one of Claims 1 to 3,
characterized
in that the interrupt gateway routine (IUB) is available for both gateway subsystems (SUB1, SUB2).

5. Modular-structured ISDN communications system according to at least one of the preceding claims,
characterized
in that the first periodic stimulus (PA1) is repeated with a period duration which is a multiple of the time interval between the first and the second periodic stimulus (PA1, PA2).

6. Modular-structured ISDN communications system according to at least one of the preceding claims,
characterized
in that the first and the second periodic stimulus (PA1, PA2) are produced from in each case one of the two signal edges of a periodic signal pulse (I).

## Revendications

1. Système de communication RNIS à structure modulaire, comprenant
- au moins une unité d'intercommunication qui comporte un réseau de connexion et à laquelle des appareils et des réseaux peuvent être raccordés par l'intermédiaire de modules périphériques,
- un processeur de système à programme enregistré,
-- qui comporte un système d'exploitation en temps réel destiné à la commande de sous-systèmes de programmes (PPS) prévus pour la mise en oeuvre de fonctions spécifiques à la communication et d'un sous-système de programme à vide ou Idle Task qui est conçu sous forme de sous-système formant sas (SUB1) pour une transition vers un système d'exploitation en temps partagé,
- une mémoire de système qui comporte des segments de mémoire adressables par l'intermédiaire de descripteurs,
- une mémoire de table de système (GDT) qui contient des descripteurs de tables de système se rapportant aux segments de mémoire du système d'exploitation en temps réel,
- une autre mémoire de table de système (IDT) qui contient des descripteurs d'interruptions de RT pour des interruptions concernant le système d'exploitation en temps réel,
- une mémoire de table de module (GDT) qui peut être sélectionnée à la place de la mémoire de table de système et qui contient des descripteurs de tables de module se rapportant à des segments de mémoire du système d'exploitation en temps partagé,
-- et qui contient des descripteurs de communication, qui se rapportent à des segments d'intercommunication du système d'exploitation en temps réel, qui peuvent être interprétés de manière identique aux descripteurs de tables de système contenus dans la mémoire de table de système et se rapportant aux segments d'intercommunication et parmi lesquels se trouvent au moins
--- un descripteur de segment de code pour l'accès au segment de code du sous-système formant sas (SUB1),
--- un descripteur de segment d'état pour l'accès à un segment d'état, associé au sous-système formant sas, dans le système d'exploitation en temps réel et
--- un descripteur de segment de données pour l'accès à un segment de données d'intercommunication qui mémorise temporairement les informations d'entrée nécessaires pour chacun des deux systèmes d'exploitation lors d'une transition vers l'autre système d'exploitation,
- une autre mémoire de table de module (IDT) qui peut être sélectionnée à la place de l'autre mémoire de table de système et qui contient des descripteurs d'interruptions de TS pour des interruptions concernant le système d'exploitation en temps partagé,
- et des instructions de commande dans le sous-système formant sas (SUB1) qui déclenchent lors de l'activation du sous-système formant sas un changement d'attribution du processeur de système des mémoires de tables de système aux mémoires de tables de module et qui provoquent ensuite à l'appel d'un descripteur de segment d'état un changement de processus vers la routine de transition par interruption (IUB), qui est ensuite terminée,
- des instructions de commande dans la routine de transition par interruption (IUB) qui déclenchent lors de l'activation de la routine de transition par interruption (IUB) à l'appel du descripteur de segment d'état de communication un changement de processus vers le sous-système formant sas (SUB1),
- d'autres instructions de commande dans le sous-système formant sas (SUB1) qui provoquent un changement d'attribution du processeur de système des mémoires de tables de module aux mémoires de tables de système,
caractérisé par le fait que
dans le système d'exploitation en temps réel, un sous-système de programme (PSS) est conçu avec une priorité plus grande qu'un autre sous-système formant sas (SUB2),
l'autre sous-système formant sas (SUB2) prend, à chaque arrivée d'une première interruption périodique (PA1), un état prêt pour l'exécution afin d'être attribué pour l'exécution au processeur de système dans le système d'exploitation en temps réel,
l'autre mémoire de table de module contient au moins pour une seconde interruption périodique (PA2) qui suit la première interruption périodique (PA1) un descripteur d'interruption qui se rapporte à la routine de transition par interruption (IUB),
l'autre mémoire de table de module contient pour des interruptions concernant le système d'exploitation en temps réel des descripteurs d'interruptions qui se rapportent à une routine de sauvegarde d'interruption (TS-IRR) dans le système d'exploitation en temps partagé,
après le changement d'attribution du processeur de système des mémoires de tables de module aux mémoires de tables de système, l'autre sous-système formant sas (SUB2) prend un état de repos prévu dans le système d'exploitation en temps réel comme état de tâche non prête à l'exécution.

2. Système de communication RNIS à structure modulaire selon la revendication 1,
caractérisé par le fait que la routine de sauvegarde d'interruption (TS-IRR) dans le système d'exploitation en temps partagé mémorise les interruptions concernant le système d'exploitation en temps réel dans le segment de données d'intercommunication.

3. Système de communication RNIS à structure modulaire selon la revendication 2,
caractérisé par le fait que, dans l'autre sous-système formant sas (SUB2), les interruptions mémorisées dans le segment de données d'intercommunication par la routine de sauvegarde d'interruption (TS-IRR) du système d'exploitation en temps partagé sont détectées.

4. Système de communication RNIS à structure modulaire selon au moins l'une des revendications 1 à 3,
caractérisé par le fait que la routine de transition par interruption (IUB) est disponible pour les deux sous-systèmes formant sas (SUB1, SUB2).

5. Système de communication RNIS à structure modulaire selon au moins l'une des revendications précédentes,
caractérisé par le fait que la première interruption périodique (PA1) se répète avec une durée de période qui est un multiple de l'intervalle de temps entre la première interruption périodique (PA1) et la seconde interruption périodique (PA2).

6. Système de communication RNIS à structure modulaire selon au moins l'une des revendications précédentes,
caractérisé par le fait que la première et la seconde interruption périodique (PA1, PA2) sont produites chacune à partir d'un des deux fronts de signal d'une impulsion de signal périodique (I).
